# EUROPEAN PATENT APPLICATION

(11) **EP 4 607 747 A1**
(43) Date of publication of application: **27.08.2025**
(21) Application number: 24806632.6
(22) Date of filing: 16.05.2024
(51) Int. Cl.: H02J 7/00

(54) **BATTERY SOC EQUALIZATION CONTROL METHOD AND SINGLE-MACHINE CONTROL METHOD**

(30) Priority: 18.05.2023 CN 202310572693
(71) Applicant: Solax Power Network Technology (Zhejiang) Co., Ltd., Zhejiang 311599 (CN)
(72) Inventor: YAO, Peng, Hangzhou, Zhejiang 311599 (CN); WU, Hengxin, Hangzhou, Zhejiang 311599 (CN)
(74) Representative: Bandpay & Greuter
(86) International application number: PCT/CN2024/093593
(87) International publication number: WO 2024/235282

(57) **Abstract**

The present invention discloses a battery SOC balancing control method and a single-machine control method. The method includes: collecting an SOC value of each single-machine in a parallel-machine system, and when the parallel-machine system meets a condition for starting SOC balancing, switching an operation mode of each single-machine according to a numerical comparison result between the SOC value of each single-machine and an average SOC value of the parallel-machine system; controlling an output of each single-machine according to a type of the operation mode of each single-machine, where the single-machine in a voltage source mode is controlled to output a rated voltage, and the single-machine in a current source mode is controlled to start a grid connection operation; when it is detected that there exists no single-machine operating in the current source mode in the parallel-machine system, switching an operation mode of the parallel-machine system to a voltage source droop parallel-machine mode. In the present application, according to the SOC value of a respective single-machine in the parallel-machine system, the operation mode of the single-machine is switched, and bidirectional balancing of SOC is autonomously achieved, the load capacity and stability of a photovoltaic energy storage system is improved.

## Description

The present application claims priority to Chinese Patent Application No. 2023105726930, filed on May 18, 2023 to the China National Intellectual Property Administration and entitled "BATTERY SOC BALANCING CONTROL METHOD AND SINGLE-MACHINE CONTROL METHOD", which is incorporated into the present application by reference in its entirety.

### TECHNICAL FIELD

The present application relates to the field of battery management technology and, in particular, to a battery SOC balancing control method and a single-machine control method.

### BACKGROUND

According to different application scenarios, photovoltaic energy storage and power generation systems can be divided into four types: on-and-off grid energy storage systems, photovoltaic off-grid power generation systems, photovoltaic grid-connected energy storage systems, and micro-grid energy storage systems with multiple energy sources mixed. Off-grid energy storage systems typically provide electric energy to the load in a manner in which multiple battery storage units are connected in parallel and then connected with the load, in order to solve the electricity problem in areas that the electricity system cannot cover. In practical applications, outputs of inverters in an off-grid energy storage system are connected in parallel and a parallel-machine system is formed through droop control to enhance a load capacity of the system.

However, due to the influence of lighting and installation location, the photovoltaic power generation capacities of respective inverters in the parallel-machine system are not consistent, and an SOC of the battery in a single-machine will gradually shift, resulting in an SOC imbalance phenomenon in the parallel-machine system. If an electric quantity of the battery of a machine runs out first during a loading process of the parallel-machine system, the machine will automatically exit the parallel-machine system, resulting in a decrease in the number of parallel-machines in the system, weakening the load capacity of the system and reducing the stability of a photovoltaic energy storage system. Realizing the SOC balancing of battery of a respective machine in the parallel-machine system is of great practical significance for the application of photovoltaic energy storage systems and is an urgent technical challenge that needs to be overcome.

### SUMMARY

The present application provides a battery SOC balancing control method and a single-machine control method. According to an SOC value of a respective single-machine in the parallel-machine system, the operation mode of the single-machine is switched, and bidirectional balancing of SOC is autonomously achieved, and thus the load capacity and stability of a photovoltaic energy storage system is improved.

In a first aspect, the present application provides a battery SOC balancing control method, including:
collecting an SOC value of each single-machine in a parallel-machine system, and when the parallel-machine system meets a condition for starting SOC balancing, switching an operation mode of each single-machine according to a numerical comparison result between the SOC value of each single-machine and an average SOC value of the parallel-machine system;
controlling an output of each single-machine according to a type of the operation mode of each single-machine, where the single-machine in a voltage source mode is controlled to output a rated voltage, and the single-machine in a current source mode is controlled to start a grid connection operation; and
detecting the SOC value of each single-machine in the parallel-machine system; every time when an SOC value of a single-machine is detected to be consistent with the average SOC value, switching an operation mode of the corresponding single-machine to a standby mode; when it is detected that there exists no single-machine operating in the current source mode in the parallel-machine system, switching an operation mode of the parallel-machine system to a voltage source droop parallel-machine mode.

According to the battery SOC balancing control method provided by the present application, an SOC value of each single-machine in a parallel-machine system is collected, and SOC value situation of a respective single-machine in the parallel-machine system is checked; when the parallel-machine system meets a condition for starting SOC balancing, an operation mode of each single-machine is switched according to a comparison result between the SCO value of the respective single-machine and an average SOC value of the parallel-machine system, an output manner of the single-machine is adjusted according to a type of the operation mode. The single-machine in a voltage source mode is controlled to output a rated voltage, and the single-machine in a current source mode is controlled to start a grid connection operation, with current being controlled to be output in parallel. After the single-machine in a current source mode starts the grid connection operation and outputs power, the SCO value of the single-machine will gradually decrease, and energy output by the single-machine in the current source mode is transferred to the single-machine in the voltage source mode through a point of common coupling in the parallel-machine system, the SOC value of the single-machine in the voltage source mode will gradually increase, thereby achieving bidirectional balancing based on the average SOC value. A single-machine in the system is controlled to broadcast an SOC value of this single-machine every a preset duration so as to further switch an operation mode of this single-machine in real time; every time when an SOC value of a single-machine is detected to be consistent with the average SOC value, an operation state of this single-machine is switched to a standby mode, to maintain the SOC value of the single machine at the average SOC value. When SOC values of all single-machines in the system are consistent with the average SOC value, it is determined that balancing of SOC values is completed, and an operation state of the parallel-machine system is switched to a voltage source droop parallel-machine mode, to jointly undertake a power supply task. In a battery SOC balancing control method provided by the present application, according to the SOC value of a respective single-machine in the parallel-machine system, the operation mode of the single-machine is switched, and bidirectional balancing of SOC is autonomously achieved, and thus the load capacity and stability of a photovoltaic energy storage system is improved.

In an implementation, the battery SOC balancing control method further includes determining whether the parallel-machine system conforms to the condition for starting the SOC balancing, including:
acquiring a maximum SOC value of single-machine, a minimum SOC value of single-machine and a load amount in the parallel-machine system; and
when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determining that the parallel-machine system meets the condition for starting the SOC balancing.

In an implementation, the switching the operation mode of each single-machine according to the numerical comparison result between the SOC value of each single-machine and the average SOC value specifically is:
switching an operation mode of a single-machine whose SOC value is greater than the average SOC value to the current source mode;
switching an operation mode of a single-machine whose SOC value is less than the average SOC value to the voltage source mode;
switching an operation mode of a single-machine whose SOC value is consistent with the average SOC value to the standby mode.

In an implementation, the single-machine in the voltage source mode being controlled to output the rated voltage, and the single-machine in the current source mode being controlled to start the grid connection operation includes:
controlling the single-machine in the voltage source mode to output a rated alternating voltage at a preset position, where the preset position is a point of common coupling; and
when an output voltage of the point of common coupling is detected to be normal, controlling the single-machine in the current source mode to start the grid connection operation.

In an implementation, the every time when the SOC value of a single-machine is detected to be consistent with the average SOC value, switching the operation mode of the corresponding single-machine to the standby mode and when it is detected that there exists no single-machine operating in the current source mode in the parallel-machine system, switching the operation mode of the parallel-machine system to the voltage source droop parallel-machine mode includes:
when a difference between the SOC value of a single-machine and the average SOC value is within a preset range, determining that the SOC value of the single-machine is consistent with the average SOC value, and switching the operation mode of the corresponding single-machine to the standby mode;
when there exists no single-machine operating in the current source mode in the parallel-machine system, determining that the SOC balancing is completed, and switching the operation mode of the parallel-machine system to the voltage source droop parallel-machine mode.

In a second aspect, the present application also provides a battery SOC balancing control system, including: a first switching module, an output control module, and a second switching module;
the first switching module is configured to: collect an SOC value of each single-machine in a parallel-machine system, and when the parallel-machine system meets a condition for starting SOC balancing, switch an operation mode of each single-machine according to a numerical comparison result between the SOC value of each single-machine and the average SOC value of the parallel-machine system;
the output control module is configured to control an output of each single-machine according to a type of the operation mode of each single-machine, where the single-machine in a voltage source mode is controlled to output a rated voltage, and the single-machine in a current source mode is controlled to start a grid connection operation; and
the second switching module is configured to: detect the SOC value of each single-machine in the parallel-machine system; every time when an SOC value of a single-machine is detected to be consistent with the average SOC value, switch an operation mode of the corresponding single-machine to a standby mode; when it is detected that there exists no single-machine operating in the current source mode in the parallel-machine system, switch an operation mode of the parallel-machine system to a voltage source droop parallel-machine mode.

According to the battery SOC balancing control system provided by the present application, an SOC value of each single-machine in a parallel-machine system is collected, and SOC value situation of a respective single-machine in the parallel-machine system is checked; when the parallel-machine system meets a condition for starting SOC balancing, an operation mode of each single-machine is switched according to a comparison result between the SCO value of the respective single-machine and an average SOC value of the parallel-machine system, an output manner of the single-machine is adjusted according to a type of the operation mode. The single-machine in a voltage source mode is controlled to output a rated voltage, and the single-machine in a current source mode is controlled to start a grid connection operation, with current being controlled to be output in parallel. After the single-machine in a current source mode starts the grid connection operation and outputs power, the SCO value of the single-machine will gradually decrease, and energy output by the single-machine in the current source mode is transferred to the single-machine in the voltage source mode through a point of common coupling in the parallel-machine system, the SOC value of the single-machine in the voltage source mode will gradually increase, thereby achieving bidirectional balancing based on the average SOC value. A single-machine in the system is controlled to broadcast an SOC value of this single-machine every a preset duration so as to further switch an operation mode of this single-machine in real time; every time when an SOC value of a single-machine is detected to be consistent with the average SOC value, an operation state of this single-machine is switched to a standby mode, to maintain the SOC value of the single machine at the average SOC value. When SOC values of all single-machines in the system are consistent with the average SOC value, it is determined that balancing of SOC values is completed, and an operation state of the parallel-machine system is switched to a voltage source droop parallel-machine mode, to jointly undertake a power supply task. In a battery SOC balancing control system provided by the present application, according to the SOC value of a respective single-machine in the parallel-machine system, the operation mode of the single-machine is switched, and bidirectional balancing of SOC is autonomously achieved, and thus the load capacity and stability of a photovoltaic energy storage system is improved.

In an implementation, the battery SOC balancing control system further includes a balancing determination module configured to determine whether the parallel-machine system conforms to the condition for starting the SOC balancing; the balancing determination module is configured to:
acquire a maximum SOC value of single-machine, a minimum SOC value of single-machine and a load amount in the parallel-machine system; and
when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determine that the parallel-machine system meets the condition for starting the SOC balancing.

In an implementation, the switching the operation mode of each single-machine according to the numerical comparison result between the SOC value of each single-machine and the average SOC value includes:
switching an operation mode of a single-machine whose SOC value is greater than the average SOC value to the current source mode;
switching an operation mode of a single-machine whose SOC value is less than the average SOC value to the voltage source mode;
switching an operation mode of a single-machine whose SOC value is consistent with the average SOC value to the standby mode.

In an implementation, the single-machine in the voltage source mode being controlled to output the rated voltage, and the single-machine in the current source mode being controlled to start the grid connection operation includes:
controlling the single-machine in the voltage source mode to output a rated alternating voltage at a preset position, where the preset position is a point of common coupling; and
when an output voltage of the point of common coupling is detected to be normal, controlling the single-machine in the current source mode to start the grid connection operation.

In an implementation, the every time when the SOC value of a single-machine is detected to be consistent with the average SOC value, switching the operation mode of the corresponding single-machine to the standby mode and when it is detected that there exists no single-machine operating in the current source mode in the parallel-machine system, switching the operation mode of the parallel-machine system to the voltage source droop parallel-machine mode includes:
when a difference between the SOC value of a single-machine and the average SOC value is within a preset range, determining that the SOC value of the single-machine is consistent with the average SOC value, and switching the operation mode of the corresponding single-machine to the standby mode;
when there exists no single-machine operating in the current source mode in the parallel-machine system, determining that the SOC balancing is completed, and switching the operation mode of the parallel-machine system to the voltage source droop parallel-machine mode.

In a third aspect, the present application also provides a single-machine control method, including:
broadcasting an SOC value of a single-machine to a parallel-machine system, and when a condition for starting SOC balancing is met, switching an operation mode of the single-machine according to a numerical comparison result between the SOC value of the single-machine and an average SOC value of the parallel-machine system;
determining an output type of the single-machine according to the operation mode of the single-machine, where when the operation mode is a voltage source mode, a rated voltage is to be output; when the operation mode is a current source mode, a grid connection operation is to be started;
updating the numerical comparison result between the SOC value of the single-machine and the average SOC value every a preset duration, and switching the operation mode of the single-machine based on the updated numerical comparison result, where when the SOC value of the single-machine is consistent with the average SOC value, the operation mode of the single-machine is switched to a standby mode.

In this way, a single-machine broadcasts an SOC value of the single-machine to the parallel-machine system, an operation mode of the single-machine is switched according to a comparison result between the SOC value of the single-machine and an average SOC value of the system, so that the single-machine in a voltage source mode outputs a rated voltage, and the single-machine in a current source mode starts a grid connection operation, with current being controlled to be output in parallel. After the single-machine in a current source mode starts the grid connection operation and outputs power, the SCO value of the single-machine will gradually decrease, and energy output by the single-machine in the current source mode is transferred to the single-machine in the voltage source mode through a point of common coupling in the parallel-machine system, the SOC value of the single-machine in the voltage source mode will gradually increase, thereby achieving bidirectional balancing based on the average SOC value. The numerical comparison result between the SOC value of the single-machine and an average SOC value is updated every a preset duration, and the operation mode of the single-machine is adjusted again according to the updated comparison result. If the SOC value of the single-machine is consistent with the average SOC value, the operation mode of the single-machine is switched to a standby mode, achieving balancing of SOC values of the single-machines.

In an implementation, the single-machine control method further includes determining whether the single-machine meets a condition for the SOC balancing, specifically being that:
acquiring a maximum SOC value of single-machine and a minimum SOC value of single-machine in the parallel-machine system;
broadcasting a load amount of the single-machine to the parallel-machine system and receiving load amount broadcasted by all single-machines in the parallel-machine system, calculating a load amount of the parallel-machine system according to the received load amount and the load amount of the single-machine; and
when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determining that the parallel-machine system meets the condition for starting the SOC balancing.

In an implementation, the single-machine control method further includes calculating the average SOC value of the parallel-machine system, including:
receiving SOC values broadcasted by all single-machines in the parallel-machine system; and
calculating the average SOC value of the parallel-machine system according to the received SOC values and the SOC value of the single-machine.

In an implementation, the switching the operation mode of the single-machine according to the numerical comparison result between the SOC value of the single-machine and the average SOC value includes:
when the SOC value of the single-machine is greater than the average SOC value, switching the operation mode to the current source mode;
when the SOC value of the single-machine is less than the average SOC value, switching the operation mode to the voltage source mode;
when the SOC value of the single-machine is consistent with the average SOC value, switching the operation mode to the standby mode.

In an implementation, the determining the output type of the single-machine according to the operation mode of the single-machine includes:
when the operation mode is the voltage source mode, determining the output type of the single-machine is a first output type; where the first output type is to output a rated alternating voltage at a point of common coupling;
when the operation mode is the current source mode, determining the output type of the single-machine is a second output type; where the second output type is to start the grid connection operation.

In an implementation, the when the SOC value of the single-machine is consistent with the average SOC value, switching the operation mode of the single-machine to the standby mode includes:
when a difference between the SOC value of the single-machine and the average SOC value is within a preset range, determining that the SOC value of the single-machine is consistent with the average SOC value, and switching the operation mode of the single-machine to the standby mode.

In an implementation, the single-machine control method further includes:
broadcasting the operation mode of the single-machine to the parallel-machine system and receiving operation modes broadcasted by all single-machines in the parallel-machine system;
when it is determined that there exists no single-machine operating in a current source operation mode in the parallel-machine system, switching the operation mode of the single-machine to the voltage source mode.

In a fourth aspect, the present application also provides a single-machine control apparatus, including: a first operation switching module, an output type determination module and a second operation switching module;
the first operation switching module is configured to: broadcast an SOC value of a single-machine to a parallel-machine system, and when a condition for starting SOC balancing is met, switch an operation mode of the single-machine according to a numerical comparison result between the SOC value of the single-machine and an average SOC value of the parallel-machine system;
the output type determination module is configured to: determine an output type of the single-machine according to the operation mode of the single-machine, where when the operation mode is a voltage source mode, a rated voltage is to be output; when the operation mode is a current source mode, a grid connection operation is to be started;
the second operation switching module is configured to: update the numerical comparison result between the SOC value of the single-machine and the average SOC value every a preset duration, and switch the operation mode of the single-machine based on the updated numerical comparison result, where when the SOC value of the single-machine is consistent with the average SOC value, the operation mode of the single-machine is switched to a standby mode.

In this way, a single-machine broadcasts an SOC value of the single-machine to the parallel-machine system, an operation mode of the single-machine is switched according to a comparison result between the SOC value of the single-machine and an average SOC value of the system, so that the single-machine in a voltage source mode outputs a rated voltage, and the single-machine in a current source mode starts a grid connection operation, with current being controlled to be output in parallel. After the single-machine in a current source mode starts the grid connection operation and outputs power, the SCO value of the single-machine will gradually decrease, and energy output by the single-machine in the current source mode is transferred to the single-machine in the voltage source mode through a point of common coupling in the parallel-machine system, the SOC value of the single-machine in the voltage source mode will gradually increase, thereby achieving bidirectional balancing based on the average SOC value. The numerical comparison result between the SOC value of the single-machine and an average SOC value is updated every a preset duration, and the operation mode of the single-machine is adjusted again according to the updated comparison result. If the SOC value of the single-machine is consistent with the average SOC value, the operation mode of the single-machine is switched to a standby mode, achieving balancing of SOC values of the single-machines.

In an implementation, the single-machine control apparatus further includes a balancing condition determination module for determining whether the single-machine meets a condition for the SOC balancing, the balancing condition determination module is configured to:
acquire a maximum SOC value of single-machine and a minimum SOC value of single-machine in the parallel-machine system;
broadcast a load amount of the single-machine to the parallel-machine system and receive load amount broadcasted by all single-machines in the parallel-machine system, calculate a load amount of the parallel-machine system according to the received load amount and the load amount of the single-machine; and
when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determine that the parallel-machine system meets the condition for starting the SOC balancing.

In an implementation, the single-machine control apparatus further includes a data receiving and calculating module configured to calculate the average SOC value of the parallel-machine system, including:
receiving SOC values broadcasted by all single-machines in the parallel-machine system; and
calculating the average SOC value of the parallel-machine system according to the received SOC values and the SOC value of the single-machine.

In an implementation, the switching the operation mode of the single-machine according to the numerical comparison result between the SOC value of the single-machine and the average SOC value includes:
when the SOC value of the single-machine is greater than the average SOC value, switching the operation mode to the current source mode;
when the SOC value of the single-machine is less than the average SOC value, switching the operation mode to the voltage source mode;
when the SOC value of the single-machine is consistent with the average SOC value, switching the operation mode to the standby mode.

In an implementation, the determining the output type of the single-machine according to the operation mode of the single-machine includes:
when the operation mode is the voltage source mode, determining the output type of the single-machine is a first output type; where the first output type is to output a rated alternating voltage at a point of common coupling;
when the operation mode is the current source mode, determining the output type of the single-machine is a second output type; where the second output type is to start the grid connection operation.

In an implementation, the when the SOC value of the single-machine is consistent with the average SOC value, switching the operation mode of the single-machine to the standby mode includes:
when a difference between the SOC value of the single-machine and the average SOC value is within a preset range, determining that the SOC value of the single-machine is consistent with the average SOC value, and switching the operation mode of the single-machine to the standby mode.

In an implementation, the single-machine control apparatus further comprises a third operation switching module, and the third operation switching module is configured to:
broadcast the operation mode of the single-machine to the parallel-machine system and receive operation modes broadcasted by all single-machines in the parallel-machine system;
when it is determined that there exists no single-machine operating in a current source operation mode in the parallel-machine system, switch the operation mode of the single-machine to the voltage source mode.

In a fifth aspect, the present application also provides a terminal device, including a processor, a memory, and a computer program stored in the memory and configured to be executed by the processor, where when the processor executes the computer program, the battery SOC balancing control method as described above is implemented.

In a sixth aspect, the present application also provides a computer readable storage medium, where the computer readable storage medium includes a stored computer program, where when the computer program is running, a device on which the computer readable storage medium is located is controlled to execute the battery SOC balancing control method as described above.

In a seventh aspect, the present application also provides a terminal device, including a processor, a memory, and a computer program stored in the memory and configured to be executed by the processor, where when the processor executes the computer program, the single-machine control method as described above is implemented.

In an eighth aspect, the present application also provides a computer readable storage medium, where the computer readable storage medium includes a stored computer program, where when the computer program is running, a device on which the computer readable storage medium is located is controlled to execute the single-machine control method as described above.

### BRIEF DESCRIPTION OF DRAWINGS

FIG. 1 is a schematic flowchart of a battery SOC balancing control method provided by an embodiment of the present invention.
FIG. 2 is a schematic implementation diagram of a battery SOC balancing control method provided by an embodiment of the present invention.
FIG. 3 is a schematic diagram for representing a direction of battery energy transfer provided by an embodiment of the present invention.
FIG. 4 is a structure diagram of modules of a battery SOC balancing control system provided by an embodiment of the present invention.
FIG. 5 is a schematic flowchart of a single-machine control method provided by an embodiment of the present invention.
FIG. 6 is a structure diagram of modules of a single-machine control apparatus provided by an embodiment of the present invention.

### DESCRIPTION OF EMBODIMENTS

Below, specific implementations of the present invention will be described in detail in conjunction with the drawings and embodiments. The following embodiments are used to explain the present invention, rather than limiting the scope of the present invention.

Terms "first" and "second" used in the description, claims, and drawings of the present application are used to distinguish different objects, rather than describing a specific order. In addition, terms "including" and "having", as well as any variants thereof, are intended to cover non-exclusive inclusions. For example, a process, a method, a system, a product, or a device that includes a series of steps or units is not limited to the listed steps or units, but may optionally include steps or units that are not listed, or may optionally include other steps or units that are inherent to the process, the method, the product, or the device.

"Embodiment" mentioned herein means that specific features, structures, or characteristics described in conjunction with the embodiment may be included in at least one embodiment of the present application. This phrase appearing in various positions in the description does not necessarily refer to the same embodiment, nor is it an independent or alternative embodiment that is mutually exclusive with other embodiments. Those skilled in the art explicitly and implicitly understand that embodiments described herein can be combined with other embodiments.

Firstly, some of the terms used in the present application are explained and described to facilitate understanding by those skilled in the art.
(1) SOC: State of Charge (State Of Charge), used to reflect a remaining capacity of a battery, defined numerically as a ratio of remaining capacity to a battery capacity, commonly expressed as a percentage; its value range is 0 - 1. When "SOC = 0", it indicates that the battery is fully discharged, and when "SOC = 1", it indicates that the battery is fully charged.
(2) Point of Common Coupling: PCC point (Point of Common Coupling), it is a point in an electricity system to which one or more user loads are connected.
(3) Grid connection: referring to a connection between a transmission line of a power generator set and a power transmission grid (starting to transmit electricity to outside). The act of electrical connection between an independent power plant or a small power system and an adjacent power system for power exchange is also known as grid connection.

### EMBODIMENT 1

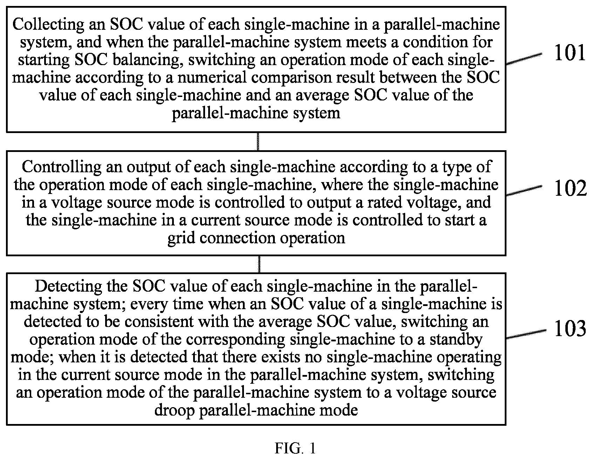

Refer to FIG. 1. FIG. 1 is a schematic flowchart of a battery SOC balancing control method provided by an embodiment of the present invention. The embodiment of the present invention provides a battery SOC balancing control method, including step 101 to step 103. The respective steps are specifically as follows.

Step 101: collecting an SOC value of each single-machine in a parallel-machine system, and when the parallel-machine system meets a condition for starting SOC balancing, switching an operation mode of each single-machine according to a numerical comparison result between the SOC value of each single-machine and an average SOC value of the parallel-machine system.

Step 102: controlling an output of each single-machine according to a type of the operation mode of each single-machine, where the single-machine in a voltage source mode is controlled to output a rated voltage, and the single-machine in a current source mode is controlled to start a grid connection operation.

Step 103: detecting the SOC value of each single-machine in the parallel-machine system; every time when an SOC value of a single-machine is detected to be consistent with the average SOC value, switching an operation mode of the corresponding single-machine to a standby mode; when it is detected that there exists no single-machine operating in the current source mode in the parallel-machine system, switching an operation mode of the parallel-machine system to a voltage source droop parallel-machine mode.

In an embodiment, the battery SOC balancing control method further includes determining whether the parallel-machine system conforms to the condition for starting the SOC balancing, including: acquiring a maximum SOC value of single-machine, a minimum SOC value of single-machine and a load amount in the parallel-machine system; and when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determining that the parallel-machine system meets the condition for starting the SOC balancing.

In the embodiment mentioned above, before an operation mode of each single-machine is switched according to a comparison result between the SOC value of each single-machine and the average SOC value, whether the parallel-machine system meets the condition for starting SOC balancing needs to be determined. Load on an off-grid photovoltaic energy storage system at night is small. In an implementation, SOC balancing determination and processing may be performed during a night time period, that is, the preset balancing time period mentioned above is during the night time period, such as 22:00 to 5:00 the next day. The preset balancing time period can be set by the user or preset by the system. When it is detected that the parallel-machine system is operating at night, single-machines in the system are controlled to broadcast the SOC value information of themselves to each other, in order to achieve the collection of SOC information of the parallel-machine system. In another implementation, based on historical application data of the parallel-machine system, an operating time period in which load on the parallel-machine system is small can be selected as the balancing time period to start SOC balancing determination and processing. When the parallel-machine system is during the balancing time period and a difference between a maximum SOC value of single-machine and a minimum SOC value of single-machine in the system exceeds 10%, it is determined that the parallel-machine system needs to perform SOC balancing at this time. At the same time, during performing SOC balancing, it is also necessary to ensure that the system is in a normal load state, that is, the system will not be overloaded. Preferably, the preset load amount is generally set to 3% -7% of a total load capacity of the parallel-machine system, and the parallel-machine system will not be overloaded at this time. Each single-machine in the parallel-machine system is controlled to broadcast its load amount and receive a load amount broadcasted by each single-machine in the parallel-machine system, so that a load amount of the entire parallel-machine system can be calculated based on the load amount broadcasted by each single-machine in the parallel-machine system. It should be noted that the determination of the condition for starting SOC balancing takes the load amount of the entire parallel-machine system into account. Even if there is an individual single-machine with excessive load and being in an overloaded state, the determination of the condition for starting SOC balancing is not affected.

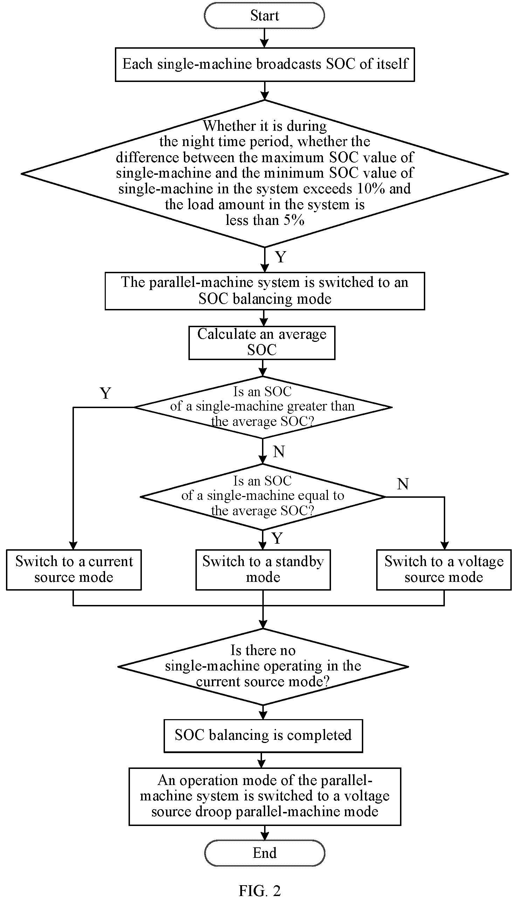

Refer to FIG. 2. FIG. 2 is a schematic implementation diagram of a battery SOC balancing control method provided by an embodiment of the present invention. When the parallel-machine system is during the night time period, the difference between the maximum SOC value of single-machine and the minimum SOC value of single-machine in the system exceeds 10% and the load amount in the system is less than 5%, it is determined that the system meets the condition for starting SOC balancing, the parallel-machine system is switched to an SOC balancing mode to perform SOC balancing control.

In an embodiment, the switching the operation mode of each single-machine according to the numerical comparison result between the SOC value of each single-machine and the average SOC value specifically is: switching an operation mode of a single-machine whose SOC value is greater than the average SOC value to the current source mode; switching an operation mode of a single-machine whose SOC value is less than the average SOC value to the voltage source mode; switching an operation mode of a single-machine whose SOC value is consistent with the average SOC value to the standby mode. The average SOC value of the parallel-machine system is calculated according to the collected SOC value of each single-machine in the parallel-machine system, and the operation mode of each single-machine is switched based on the numerical comparison result between the SOC value of each single-machine and the average SOC value. When the SOC value of a single-machine is greater than the average SOC value, the single-machine is switched to a voltage source operation mode; when the SOC value of a single-machine is less than the average SOC value, the single-machine is switched to a current source operation mode; when the SOC value of a single-machine is consistent with the average SOC value, the single-machine is switched to a standby mode, the single-machine does not operate at this time.

In an embodiment, the single-machine in the voltage source mode being controlled to output the rated voltage, and the single-machine in the current source mode being controlled to start the grid connection operation includes: controlling the single-machine in the voltage source mode to output a rated alternating voltage at a preset position, where the preset position is a point of common coupling; and when an output voltage of the point of common coupling is detected to be normal, controlling the single-machine in the current source mode to start the grid connection operation. After an operation mode of a respective single-machine is determined, an output manner of each single-machine is controlled according to a type of the operation mode. The single-machine operating in the voltage source mode outputs the rated alternating voltage at the point of common coupling. When a voltage at the point of common coupling is detected to be normal, the single-machine operating in the current source mode is controlled to start the grid connection operation. That is, the parallel-machine system is connected to a normal power grid to jointly undertake a power supply task.

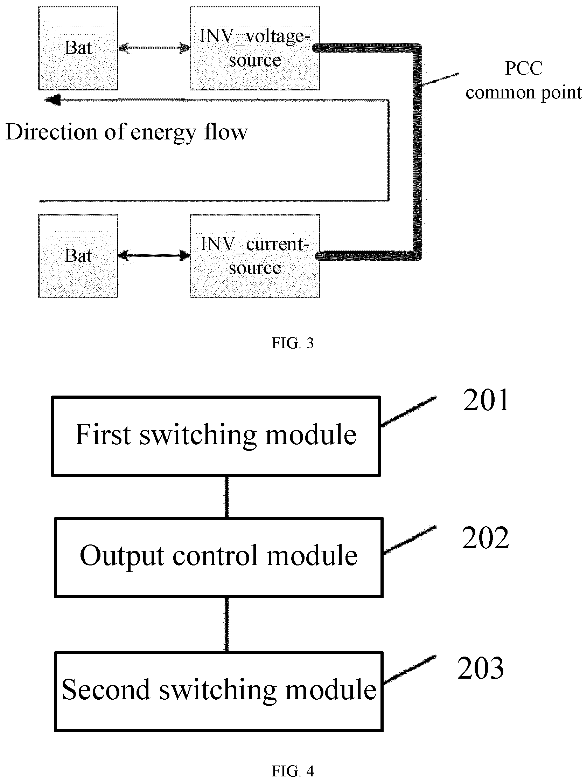

Refer to FIG. 3. FIG. 3 is a schematic diagram for representing a direction of battery energy transfer provided by an embodiment of the present invention. INV_voltage-source represents a voltage source inverter, INV_current-source represents a current source inverter, Bat represents a battery, PCC represents a point of common coupling. An output of the INV_voltage-source operating in a voltage source mode establishes a support voltage at the point of common coupling PCC, while the INV _current-source operating in a current source mode controls current to output in parallel. The energy output by the INV _current-source is transferred to the INV_voltage-source operating in the voltage source mode through the point of common coupling PCC. Specifically, the energy output by the INV_current-source reaches a bridge arm of the INV_voltage-source through the point of common coupling PCC to charge a bus of the INV_voltage-source. Due to a bidirectional operation of a battery DCDC controller of the inverter, the battery Bat of the inverter can be charged or discharged. When a bus voltage of the INV_voltage-source increases, the INV_voltage-source controls the battery Bat to operate in a charging state, to obtain charging energy from the bus to achieve an effect of reducing the bus voltage, thus achieving the energy transfer from the battery of the current source inverter to the battery of the voltage source inverter.

In an embodiment, the when it is detected that there is no single-machine operating in the current source mode in the parallel-machine system, switching the operation mode of the parallel-machine system to the voltage source droop parallel-machine mode includes: when it is detected that the SOC value of the single-machine in the voltage source mode is consistent with the average SOC value, switching the operation mode of the single-machine in the voltage source mode to the standby mode; when it is detected that a difference between the SOC value of the single-machine in the current source mode and the average SOC value is within a preset range, determining that the SOC value of the single-machine in the current source mode is consistent with the average SOC value, and switching the operation mode of the single-machine in the current source mode to the standby mode; when it is detected that all single-machines are in the standby mode, determining that the SOC balancing is completed, and switching the operation mode of the parallel-machine system to the voltage source droop parallel-machine mode. Each single-machine in the parallel-machine system is controlled to broadcast the SOC value of this single-machine every a preset duration. Preferably, in order to more accurately capture the SOC value of a respective single-machine in real time, each single-machine can also be controlled to broadcast the SOC value of this single-machine in real time. The single-machine operating in the voltage source mode receives energy transmitted from the single-machine operating in the current source mode, and the SOC value continuously increases. When the SOC value increases to the average SOC value, an operation state of the single-machine is switched to the standby mode, and the single-machine exits from the parallel-machine system at this time. The single-machine in the current source mode outputs power during operating in a grid connection state, the SOC value of itself will gradually decrease. When it is detected that the SOC value is consistent with the average SOC value, an operation state of the single-machine is switched to the standby mode, and the single-machine exits from the parallel-machine system at this time. As an optimized solution of an embodiment of the present invention, considering a loss of power transmission, there is a certain error in the SOC value detection of a single-machine operating in the current source mode. When an error between an SOC value of a single-machine operating in the current source mode and the average SOC value is within ± 3%, it can also be determined that the SOC value of the single-machine is consistent with the average SOC value at this time. When all single-machines in the system are in the standby mode, it is determined that an SOC of the single-machine is consistent at this time, and the SOC balancing of this time is completed, the parallel-machine system is controlled to operate again in the voltage source droop parallel-machine mode.

In an embodiment of the present invention, a battery SOC balancing control device based on droop control is also provided, including a processor, a memory, and a computer program stored in the memory and configured to be executed by the processor; when the processor executes the computer program, the battery SOC balancing control method based on droop control described above is implemented.

In an embodiment of the present invention, a computer readable storage medium is also provided, where the computer readable storage medium includes a stored computer program, where when the computer program is running, a device on which the computer readable storage medium is located is controlled to execute the battery SOC balancing control method based on droop control described above is implemented.

As an example, the computer program can be divided into one or more modules, the one or more modules are stored in the memory and executed by the processor to complete the present invention. The one or more modules may be a series of instruction segments of the computer program capable of performing specific functions, and the instruction segments are used to describe the execution process of the computer program in a battery SOC balancing control device based on droop control.

The battery SOC balancing control device based on droop control can be a computing device such as a desktop computer, a laptop, a handheld computer, and a cloud server. The battery SOC balancing control device based on droop control may include, but not limited to, a processor, a memory, and a display. Those skilled in the art can understand that the components described above are only examples of the battery SOC balancing control device based on droop control, and do not constitute limitations on the battery SOC balancing control device based on droop control. More or fewer components than the mentioned components may be included, or certain components may be combined, or different components may be included. For example, the battery SOC balancing control device based on droop control may also include an input/output device, a network access device, a bus, etc.

The processor can be a central processing unit (Central Processing Unit, CPU), as well as other general-purpose processors, digital signal processors (Digital Signal Processor, DSP), application specific integrated circuits (Application Specific Integrated Circuit, ASIC), field programmable gate arrays (Field-Programmable Gate Array, FPGA), or other programmable logic devices, discrete gates or transistor logic devices, discrete hardware components, etc. The general-purpose processor can be a microprocessor or any conventional processor, etc. The processor is a control center of the battery SOC balancing control device based on droop control, and various interfaces and lines are utilized to connect various parts of the entire battery SOC balancing control device based on droop control.

The memory can be used to store the computer programs and/or the modules, and the processor implements various functions of the battery SOC balancing control device based on droop control by running or executing the computer programs and/or the modules stored in the memory, as well as calling data stored in the memory. The memory may mainly include a program storage area and a data storage area, where the program storage area may store an operating system, an application program required for at least one function (such as a sound playback function, a text conversion function, etc.), etc.; the data storage area can store data created according to the use of a mobile phone (such as audio data, text message data, etc.), etc. In addition, the memory may include a high-speed random access memory, as well as a nonvolatile memory such as a hard drive, a memory, a plug-in hard drive, a smart media cards (Smart Media Cards, SMC), a secure digital (Secure Digital, SD) card, a flash card (Flash Card), at least one disk storage device, a flash memory device, or other volatile solid-state storage devices.

If the integrated module of the battery SOC balancing control device based on droop control is implemented in a form of software functional units and sold or used as an independent product, it can be stored in a computer readable storage medium. Based on this understanding, the present invention can implement all or part of the processes in the embodiments described above, or it can be completed by instructing relevant hardware through a computer program, where the computer program can be stored in a computer readable storage medium, and when the computer program is executed by a processor, steps of a respective embodiment described above can be implemented. The computer program includes computer program codes, where the computer program codes can be in a form of source codes, object codes, an executable file, or some intermediate forms. The computer readable medium may include any entity or apparatus capable of carrying the computer program codes, such as a recording media, a USB flash drive, a portable hard drive, a magnetic disk, an optical disk, a computer memory, a read-only memory (ROM, Read-Only Memory), a random access memory (RAM, Random Access Memory), a carrier signal, a telecommunications signal, and a software distribution media. It should be noted that content included in the computer readable medium may be appropriately added or removed according to requirements of legislation and patent practice within a jurisdiction region; for example, in some jurisdiction regions, according to legislation and patent practice, a computer readable medium does not include carrier signals and telecommunications signals. Those with ordinary skill in the art can understand and implement without paying creative efforts.

According to the battery SOC balancing control method provided by an embodiment of the present invention, SOC values of single-machines in a parallel-machine system are collected, and SOC value situation of a respective single-machine in the parallel-machine system is checked; when the parallel-machine system meets a condition for starting SOC balancing, an operation mode of each single-machine is switched according to a comparison result between the SCO value of the respective single-machine and an average SOC value of the parallel-machine system, an output manner of the single-machine is adjusted according to a type of the operation mode. The single-machine in a voltage source mode is controlled to output a rated voltage, and the single-machine in a current source mode is controlled to start a grid connection operation, with current being controlled to be output in parallel. After the single-machine in a current source mode starts the grid connection operation and outputs power, the SCO value of the single-machine will gradually decrease, and energy output by the single-machine operating in the current source mode is transferred to the single-machine operating in the voltage source mode through a point of common coupling in the parallel-machine system, the SOC value of the single-machine operating in the voltage source mode will gradually increase, thereby achieving bidirectional balancing based on the average SOC value. A single-machine in the system is controlled to broadcast an SOC value of this single-machine every a preset duration so as to further switch an operation mode of this single-machine in real time; every time when an SOC value of a single-machine is detected to be consistent with the average SOC value, an operation state of this single-machine is switched to a standby mode, to maintain the SOC value of the single machine at the average SOC value. When SOC values of all single-machines in the system are consistent with the average SOC value, it is determined that balancing of SOC values is completed, and an operation state of the parallel-machine system is switched to a voltage source droop parallel-machine mode, to jointly undertake a power supply task. In a battery SOC balancing control method provided by the embodiment of the present invention, according to the SOC value of a respective single-machine in the parallel-machine system, the operation mode of the single-machine is switched, and bidirectional balancing of SOC is autonomously achieved, and thus the load capacity and stability of a photovoltaic energy storage system is improved.

### EMBODIMENT 2

Refer to FIG. 4. FIG. 4 is a structure diagram of modules of a battery SOC balancing control system provided by an embodiment of the present invention. The embodiment of the present invention provides a battery SOC balancing control system, including: a first switching module 201, an output control module 202, and a second switching module 203.

The first switching module 201 is configured to: collect an SOC value of each single-machine in a parallel-machine system, and when the parallel-machine system meets a condition for starting SOC balancing, switch an operation mode of each single-machine according to a numerical comparison result between the SOC value of each single-machine and the average SOC value of the parallel-machine system.

The output control module 202 is configured to: control an output of each single-machine according to a type of the operation mode of each single-machine, where the single-machine in a voltage source mode is controlled to output a rated voltage, and the single-machine in a current source mode is controlled to start a grid connection operation.

The second switching module 203 is configured to: detect the SOC value of each single-machine in the parallel-machine system; every time when an SOC value of a single-machine is detected to be consistent with the average SOC value, switch an operation mode of the corresponding single-machine to a standby mode; when it is detected that there exists no single-machine operating in the current source mode in the parallel-machine system, switch an operation mode of the parallel-machine system to a voltage source droop parallel-machine mode.

In an embodiment, the battery SOC balancing control system further includes a balancing determination module configured to determine whether the parallel-machine system conforms to the condition for starting the SOC balancing, specifically being that:
acquiring a maximum SOC value of single-machine, a minimum SOC value of single-machine and a load amount in the parallel-machine system; and
when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determining that the parallel-machine system meets the condition for starting the SOC balancing.

In an embodiment, the switching the operation mode of each single-machine according to the numerical comparison result between the SOC value of each single-machine and the average SOC value specifically is:
switching an operation mode of a single-machine whose SOC value is greater than the average SOC value to the current source mode;
switching an operation mode of a single-machine whose SOC value is less than the average SOC value to the voltage source mode;
switching an operation mode of a single-machine whose SOC value is consistent with the average SOC value to the standby mode.

In an embodiment, the single-machine in the voltage source mode being controlled to output the rated voltage, and the single-machine in the current source mode being controlled to start the grid connection operation includes:
controlling the single-machine in the voltage source mode to output a rated alternating voltage at a preset position, where the preset position is a point of common coupling; and
when an output voltage of the point of common coupling is detected to be normal, controlling the single-machine in the current source mode to start the grid connection operation.

In an embodiment, the every time when the SOC value of a single-machine is detected to be consistent with the average SOC value, switching the operation mode of the corresponding single-machine to the standby mode and when it is detected that there exists no single-machine operating in the current source mode in the parallel-machine system, switching the operation mode of the parallel-machine system to the voltage source droop parallel-machine mode includes: when a difference between the SOC value of a single-machine and the average SOC value is within a preset range, determining that the SOC value of the single-machine is consistent with the average SOC value, and switching the operation mode of the corresponding single-machine to the standby mode; when there exists no single-machine operating in the current source mode in the parallel-machine system, determining that the SOC balancing is completed, and switching the operation mode of the parallel-machine system to the voltage source droop parallel-machine mode.

Those skilled in the art can clearly understand that, for convenience and conciseness of the description, for the specific operation processes of the system described above, reference may be made to the corresponding processes in the aforementioned method embodiments, and details will not be repeated here.

According to the battery SOC balancing control system provided by an embodiment of the present invention, SOC values of single-machines in a parallel-machine system are collected, and SOC value situation of a respective single-machine in the parallel-machine system is checked; when the parallel-machine system meets a condition for starting SOC balancing, an operation mode of each single-machine is switched according to a comparison result between the SCO value of the respective single-machine and an average SOC value of the parallel-machine system, an output manner of the single-machine is adjusted according to a type of the operation mode. The single-machine in a voltage source mode is controlled to output a rated voltage, and the single-machine in a current source mode is controlled to start a grid connection operation, with current being controlled to be output in parallel. After the single-machine in a current source mode starts the grid connection operation and outputs power, the SCO value of the single-machine will gradually decrease, and energy output by the single-machine operating in the current source mode is transferred to the single-machine operating in the voltage source mode through a point of common coupling in the parallel-machine system, the SOC value of the single-machine operating in the voltage source mode will gradually increase, thereby achieving bidirectional balancing based on the average SOC value. A single-machine in the system is controlled to broadcast an SOC value of this single-machine every a preset duration so as to further switch an operation mode of this single-machine in real time; every time when an SOC value of a single-machine is detected to be consistent with the average SOC value, an operation state of this single-machine is switched to a standby mode, to maintain the SOC value of the single machine at the average SOC value. When SOC values of all single-machines in the system are consistent with the average SOC value, it is determined that balancing of SOC values is completed, and an operation state of the parallel-machine system is switched to a voltage source droop parallel-machine mode, to jointly undertake a power supply task. In a battery SOC balancing control system provided by the embodiment of the present invention, according to the SOC value of a respective single-machine in the parallel-machine system, the operation mode of the single-machine is switched, and bidirectional balancing of SOC is autonomously achieved, and thus the load capacity and stability of a photovoltaic energy storage system is improved.

### EMBODIMENT 3

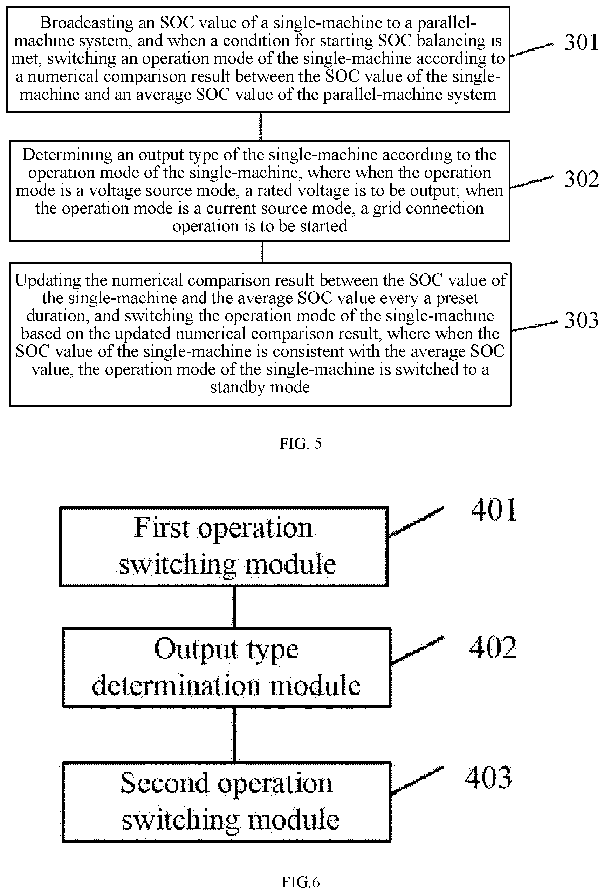

Refer to FIG. 5. FIG. 5 is a schematic flowchart of a single-machine control method provided by an embodiment of the present invention. The embodiment of the present invention provides a single-machine control method, including step 301 to step 303. The respective steps are specifically as follows.

Step 301: broadcasting an SOC value of a single-machine to a parallel-machine system, and when a condition for starting SOC balancing is met, switching an operation mode of the single-machine according to a numerical comparison result between the SOC value of the single-machine and an average SOC value of the parallel-machine system.

Step 302: determining an output type of the single-machine according to the operation mode of the single-machine, where when the operation mode is a voltage source mode, a rated voltage is to be output; when the operation mode is a current source mode, a grid connection operation is to be started.

Step 303: updating the numerical comparison result between the SOC value of the single-machine and the average SOC value every a preset duration, and switching the operation mode of the single-machine based on the updated numerical comparison result, where when the SOC value of the single-machine is consistent with the average SOC value, the operation mode of the single-machine is switched to a standby mode.

The single-machine control method provided by the embodiment of the present invention is applicable to the single-machine in the parallel-machine system in EMBODIMENT 1. Those skilled in the art can clearly understand that, for convenience and conciseness of the description, for the specific operation processes of the single-machine control method described above, reference may be made to the corresponding processes in the aforementioned method embodiments, and details will not be repeated here.

In an embodiment, the single-machine control method further includes determining whether the single-machine meets a condition for the SOC balancing, specifically being that: acquiring a maximum SOC value of single-machine and a minimum SOC value of single-machine in the parallel-machine system; broadcasting a load amount of the single-machine to the parallel-machine system and receiving load amount broadcasted by all single-machines in the parallel-machine system, calculating a load amount of the parallel-machine system according to the received load amount and the load amount of the single-machine; and when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determining that the parallel-machine system meets the condition for starting the SOC balancing. When the parallel-machine system is operating in the preset balancing time period, if the difference between the maximum SOC value of single-machine and the minimum SOC value of single-machine in the received SOC values of all single-machines exceeds 10% at this time and the load amount of the parallel-machine system exceeds a preset threshold, it is determined that the parallel-machine system meets the condition for starting the SOC balancing at this time, the operation mode of the single-machine needs to be switched according to the numerical comparison result between the SOC value of this single-machine and the average SOC value of the parallel-machine system. In an embodiment, the single-machine control method further includes acquiring the average SOC value of the parallel-machine system, including: receiving SOC values broadcasted by all single-machines in the parallel-machine system; and calculating the average SOC value of the parallel-machine system according to the received SOC values and the SOC value of the single-machine. When a single-machine performs SOC balancing, the operation mode of this single-machine needs to be switched according to the numerical comparison result between the SOC value of this single-machine and the average SOC value of the parallel-machine system. When a single-machine broadcasts an SOC value of this single-machine to the parallel-machine system, this single-machine is controlled to receive SOC values of all other single-machines in the parallel-machine system. The average SOC value of the parallel-machine system can be obtained according to the received SOC values of all the single-machines and the SOC value of this single-machine. As an alternative solution of an embodiment of the present invention, a single-machine in the parallel-machine system can be selected as a main control single-machine, the main control single-machine is configured to receive SOC values of all single-machines in the parallel-machine system, generate the average SOC value of the parallel-machine system based on the received SOC values of the single-machines and an SOC value of the main control single-machine, and broadcast the average SOC value to all single-machines in the parallel-machine system.

In an embodiment, the switching the operation mode of the single-machine according to the numerical comparison result between the SOC value of the single-machine and the average SOC value includes: when the SOC value of the single-machine is greater than the average SOC value, switching the operation mode to the current source mode; when the SOC value of the single-machine is less than the average SOC value, switching the operation mode to the voltage source mode; when the SOC value of the single-machine is consistent with the average SOC value, switching the operation mode to the standby mode.

In an embodiment, the when a condition for starting SOC balancing is met, determining the output type of the single-machine according to the operation mode of the single-machine includes: when the operation mode is the voltage source mode, determining the output type of the single-machine is a first output type; where the first output type is to output a rated alternating voltage at a point of common coupling; when the operation mode is the current source mode, determining the output type of the single-machine is a second output type; where the second output type is to start the grid connection operation.

In an embodiment, the when the SOC value of the single-machine is consistent with the average SOC value, switching the operation mode of the single-machine to the standby mode further includes:
when a difference between the SOC value of the single-machine and the average SOC value is within a preset range, determining that the SOC value of the single-machine is consistent with the average SOC value, and switching the operation mode of the single-machine to the standby mode.

In an embodiment, the single-machine control method further includes: broadcasting the operation mode of the single-machine to the parallel-machine system and receiving operation modes broadcasted by all single-machines in the parallel-machine system; and when it is determined that there exists no single-machine operating in a current source operation mode in the parallel-machine system, switching the operation mode of the single-machine to the voltage source mode. As an optimized solution of an embodiment of the present invention, when a single-machine switches the operation mode of this single-machine according to the numerical comparison result between the SOC value of this single-machine and the average SOC value, this single-machine can synchronously broadcast the operation mode of this single-machine to the parallel-machine system and receive operation modes broadcasted by other single-machines in the parallel-machine system. When it is determined that there exists no single-machine operating in the current source mode in the parallel-machine system, it can be determined that the SOC balancing of the parallel-machine system is completed at this time, the operation mode of this single-machine is directly switched to the voltage source mode without waiting for the consistency between the SOC value of this single-machine and the average SOC value. When the operation modes of all single-machines are switched to the voltage source mode, the operation mode of the parallel-machine system is correspondingly switched to the voltage source droop parallel-machine mode.

According to the single-machine control method provided by the embodiment of the present invention, a single-machine broadcasts an SOC value of the single-machine to the parallel-machine system, an operation mode of the single-machine is switched according to a comparison result between the SOC value of the single-machine and an average SOC value of the system, so that the single-machine in a voltage source mode outputs a rated voltage, and the single-machine in a current source mode starts a grid connection operation, with current being controlled to be output in parallel. After the single-machine in a current source mode starts the grid connection operation and outputs power, the SCO value of the single-machine will gradually decrease, and energy output by the single-machine in the current source mode is transferred to the single-machine in the voltage source mode through a point of common coupling in the parallel-machine system, the SOC value of the single-machine in the voltage source mode will gradually increase, thereby achieving bidirectional balancing based on the average SOC value. The numerical comparison result between the SOC value of the single-machine and an average SOC value is updated every a preset duration, and the operation mode of the single-machine is adjusted again according to the updated comparison result. If the SOC value of the single-machine is consistent with the average SOC value, the operation mode of the single-machine is switched to a standby mode, achieving balancing of SOC values of the single-machines.

### EMBODIMENT 4

Refer to FIG. 6. FIG. 6 is a structure diagram of modules of a single-machine control apparatus provided by an embodiment of the present invention. The embodiment of the present invention provides a single-machine control apparatus, including: a first operation switching module 401, an output type determination module 402 and a second operation switching module 403.

The first operation switching module 401 is configured to: broadcast an SOC value of a single-machine to a parallel-machine system, and when a condition for starting SOC balancing is met, switch an operation mode of the single-machine according to a numerical comparison result between the SOC value of the single-machine and an average SOC value of the parallel-machine system.

The output type determination module 402 is configured to: determine an output type of the single-machine according to the operation mode of the single-machine, where when the operation mode is a voltage source mode, a rated voltage is to be output; when the operation mode is a current source mode, a grid connection operation is to be started.

The second operation switching module 403 is configured to: update the numerical comparison result between the SOC value of the single-machine and the average SOC value every a preset duration, and switch the operation mode of the single-machine based on the updated numerical comparison result, where when the SOC value of the single-machine is consistent with the average SOC value, the operation mode of the single-machine is switched to a standby mode.

In an embodiment, the single-machine control apparatus further includes a balancing condition determination module for determining whether the single-machine meets a condition for the SOC balancing, the balancing condition determination module is configured to:
acquire a maximum SOC value of single-machine and a minimum SOC value of single-machine in the parallel-machine system; broadcast a load amount of the single-machine to the parallel-machine system and receive load amount broadcasted by all single-machines in the parallel-machine system, calculate a load amount of the parallel-machine system according to the received load amount and the load amount of the single-machine; and when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determine that the parallel-machine system meets the condition for starting the SOC balancing.

In an embodiment, the single-machine control apparatus further comprises a data receiving and calculating module configured to acquire the average SOC value of the parallel-machine system, specifically being that: receiving SOC values broadcasted by all single-machines in the parallel-machine system; and calculating the average SOC value of the parallel-machine system according to the received SOC values and the SOC value of the single-machine.

In an embodiment, the switching the operation mode of the single-machine according to the numerical comparison result between the SOC value of the single-machine and the average SOC value includes: when the SOC value of the single-machine is greater than the average SOC value, switching the operation mode to the current source mode; when the SOC value of the single-machine is less than the average SOC value, switching the operation mode to the voltage source mode; when the SOC value of the single-machine is consistent with the average SOC value, switching the operation mode to the standby mode.

In an embodiment, the determining the output type of the single-machine according to the operation mode of the single-machine includes: when the operation mode is the voltage source mode, determining the output type of the single-machine is a first output type; where the first output type is to output a rated alternating voltage at a point of common coupling; when the operation mode is the current source mode, determining the output type of the single-machine is a second output type; where the second output type is to start the grid connection operation.

In an embodiment, the when the SOC value of the single-machine is consistent with the average SOC value, switching the operation mode of the single-machine to the standby mode includes: when a difference between the SOC value of the single-machine and the average SOC value is within a preset range, determining that the SOC value of the single-machine is consistent with the average SOC value, and switching the operation mode of the single-machine to the standby mode.

In an embodiment, the single-machine control apparatus further comprises a third operation switching module, and the third operation switching module is configured to: broadcast the operation mode of the single-machine to the parallel-machine system and receive operation modes broadcasted by all single-machines in the parallel-machine system; when it is determined that there exists no single-machine operating in a current source operation mode in the parallel-machine system, switch the operation mode of the single-machine to the voltage source mode.

Those skilled in the art can clearly understand that, for convenience and conciseness of the description, for the specific operation processes of the apparatus described above, reference may be made to the corresponding processes in the aforementioned method EMBODIMENT 3, and details will not be repeated here.

According to the single-machine control apparatus provided by the embodiment of the present invention, a single-machine broadcasts an SOC value of the single-machine to the parallel-machine system, an operation mode of the single-machine is switched according to a comparison result between the SOC value of the single-machine and an average SOC value of the system, so that the single-machine in a voltage source mode outputs a rated voltage, and the single-machine in a current source mode starts a grid connection operation, with current being controlled to be output in parallel. After the single-machine in a current source mode starts the grid connection operation and outputs power, the SCO value of the single-machine will gradually decrease, and energy output by the single-machine in the current source mode is transferred to the single-machine in the voltage source mode through a point of common coupling in the parallel-machine system, the SOC value of the single-machine in the voltage source mode will gradually increase, thereby achieving bidirectional balancing based on the average SOC value. The numerical comparison result between the SOC value of the single-machine and an average SOC value is updated every a preset duration, and the operation mode of the single-machine is adjusted again according to the updated comparison result. If the SOC value of the single-machine is consistent with the average SOC value, the operation mode of the single-machine is switched to a standby mode, achieving balancing of SOC values of the single-machines. The described above is only preferred embodiments of the present invention. It should be pointed out that for those with ordinary skill in the art, several improvements and substitutions can be further made without departing from the technical principles of the present invention, and these improvements and substitutions should also be considered as within the protection scope of the present invention.

## Claims

1. A battery SOC balancing control method, comprising:
collecting an SOC value of each single-machine in a parallel-machine system, and when the parallel-machine system meets a condition for starting SOC balancing, switching an operation mode of each single-machine according to a numerical comparison result between the SOC value of each single-machine and an average SOC value of the parallel-machine system;
controlling an output of each single-machine according to a type of the operation mode of each single-machine, wherein the single-machine in a voltage source mode is controlled to output a rated voltage, and the single-machine in a current source mode is controlled to start a grid connection operation; and
detecting the SOC value of each single-machine in the parallel-machine system; every time when an SOC value of a single-machine is detected to be consistent with the average SOC value, switching an operation mode of the corresponding single-machine to a standby mode; when it is detected that there exists no single-machine operating in the current source mode in the parallel-machine system, switching an operation mode of the parallel-machine system to a voltage source droop parallel-machine mode.

2. The battery SOC balancing control method according to claim 1, wherein the battery SOC balancing control method further comprises determining whether the parallel-machine system conforms to the condition for starting the SOC balancing, comprising:
acquiring a maximum SOC value of single-machine, a minimum SOC value of single-machine and a load amount in the parallel-machine system; and
when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determining that the parallel-machine system meets the condition for starting the SOC balancing.

3. The battery SOC balancing control method according to claim 1, wherein the switching the operation mode of each single-machine according to the numerical comparison result between the SOC value of each single-machine and the average SOC value specifically is:
switching an operation mode of a single-machine whose SOC value is greater than the average SOC value to the current source mode;
switching an operation mode of a single-machine whose SOC value is less than the average SOC value to the voltage source mode;
switching an operation mode of a single-machine whose SOC value is consistent with the average SOC value to the standby mode.

4. The battery SOC balancing control method according to claim 1, wherein the single-machine in the voltage source mode being controlled to output the rated voltage, and the single-machine in the current source mode being controlled to start the grid connection operation comprises:
controlling the single-machine in the voltage source mode to output a rated alternating voltage at a preset position, wherein the preset position is a point of common coupling; and
when an output voltage of the point of common coupling is detected to be normal, controlling the single-machine in the current source mode to start the grid connection operation.

5. The battery SOC balancing control method according to claim 1, wherein the every time when the SOC value of a single-machine is detected to be consistent with the average SOC value, switching the operation mode of the corresponding single-machine to the standby mode and when it is detected that there exists no single-machine operating in the current source mode in the parallel-machine system, switching the operation mode of the parallel-machine system to the voltage source droop parallel-machine mode comprises:
when a difference between the SOC value of a single-machine and the average SOC value is within a preset range, determining that the SOC value of the single-machine is consistent with the average SOC value, and switching the operation mode of the corresponding single-machine to the standby mode;
when there exists no single-machine operating in the current source mode in the parallel-machine system, determining that the SOC balancing is completed, and switching the operation mode of the parallel-machine system to the voltage source droop parallel-machine mode.

6. A battery SOC balancing control system, comprising: a first switching module, an output control module, and a second switching module;
wherein the first switching module is configured to: collect an SOC value of each single-machine in a parallel-machine system, and when the parallel-machine system meets a condition for starting SOC balancing, switch an operation mode of each single-machine according to a numerical comparison result between the SOC value of each single-machine and the average SOC value of the parallel-machine system;
the output control module is configured to: control an output of each single-machine according to a type of the operation mode of each single-machine, wherein the single-machine in a voltage source mode is controlled to output a rated voltage, and the single-machine in a current source mode is controlled to start a grid connection operation; and
the second switching module is configured to: detect the SOC value of each single-machine in the parallel-machine system; every time when an SOC value of a single-machine is detected to be consistent with the average SOC value, switch an operation mode of the corresponding single-machine to a standby mode; when it is detected that there exists no single-machine operating in the current source mode in the parallel-machine system, switch an operation mode of the parallel-machine system to a voltage source droop parallel-machine mode.

7. The battery SOC balancing control system according to claim 6, wherein the battery SOC balancing control system further comprises a balancing determination module configured to determine whether the parallel-machine system conforms to the condition for starting the SOC balancing; the balancing determination module is configured to:
acquire a maximum SOC value of single-machine, a minimum SOC value of single-machine and a load amount in the parallel-machine system; and
when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determine that the parallel-machine system meets the condition for starting the SOC balancing.

8. The battery SOC balancing control system according to claim 6, wherein the switching the operation mode of each single-machine according to the numerical comparison result between the SOC value of each single-machine and the average SOC value comprises:
switching an operation mode of a single-machine whose SOC value is greater than the average SOC value to the current source mode;
switching an operation mode of a single-machine whose SOC value is less than the average SOC value to the voltage source mode;
switching an operation mode of a single-machine whose SOC value is consistent with the average SOC value to the standby mode.

9. The battery SOC balancing control system according to claim 6, wherein the single-machine in the voltage source mode being controlled to output the rated voltage, and the single-machine in the current source mode being controlled to start the grid connection operation comprises:
controlling the single-machine in the voltage source mode to output a rated alternating voltage at a preset position, wherein the preset position is a point of common coupling; and
when an output voltage of the point of common coupling is detected to be normal, controlling the single-machine in the current source mode to start the grid connection operation.

10. The battery SOC balancing control system according to claim 6, wherein the every time when the SOC value of a single-machine is detected to be consistent with the average SOC value, switching the operation mode of the corresponding single-machine to the standby mode and when it is detected that there exists no single-machine operating in the current source mode in the parallel-machine system, switching the operation mode of the parallel-machine system to the voltage source droop parallel-machine mode comprises:
when a difference between the SOC value of a single-machine and the average SOC value is within a preset range, determining that the SOC value of the single-machine is consistent with the average SOC value, and switching the operation mode of the corresponding single-machine to the standby mode;
when there exists no single-machine operating in the current source mode in the parallel-machine system, determining that the SOC balancing is completed, and switching the operation mode of the parallel-machine system to the voltage source droop parallel-machine mode.

11. A single-machine control method, comprising:
broadcasting an SOC value of a single-machine to a parallel-machine system, and when the parallel-machine system meets a condition for starting SOC balancing, switching an operation mode of the single-machine according to a numerical comparison result between the SOC value of the single-machine and an average SOC value of the parallel-machine system;
determining an output type of the single-machine according to the operation mode of the single-machine, wherein when the operation mode is a voltage source mode, a rated voltage is to be output; when the operation mode is a current source mode, a grid connection operation is to be started;
updating the SOC value of the single-machine every a preset duration, and comparing the updated SOC value of the single-machine and the average SOC value, switching the operation mode of the single-machine based on the updated numerical comparison result, wherein when the updated SOC value of the single-machine is consistent with the average SOC value, the operation mode of the single-machine is switched to a standby mode.

12. The single-machine control method according to claim 11, wherein the single-machine control method further comprises determining whether the parallel-machine system meets a condition for the SOC balancing, specifically being that:
acquiring a maximum SOC value of single-machine and a minimum SOC value of single-machine in the parallel-machine system;
broadcasting a load amount of the single-machine to the parallel-machine system and receiving load amount broadcasted by all single-machines in the parallel-machine system, calculating a load amount of the parallel-machine system according to the received load amount and the load amount of the single-machine; and
when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determining that the parallel-machine system meets the condition for starting the SOC balancing.

13. The single-machine control method according to claim 11, wherein the single-machine control method further comprises acquiring the average SOC value of the parallel-machine system, comprising:
receiving SOC values broadcasted by all single-machines in the parallel-machine system; and
calculating the average SOC value of the parallel-machine system according to the received SOC values and the SOC value of the single-machine.

14. The single-machine control method according to claim 11, wherein the switching the operation mode of the single-machine according to the numerical comparison result between the SOC value of the single-machine and the average SOC value comprises:
when the SOC value of the single-machine is greater than the average SOC value, switching the operation mode to the current source mode;
when the SOC value of the single-machine is less than the average SOC value, switching the operation mode to the voltage source mode;
when the SOC value of the single-machine is consistent with the average SOC value, switching the operation mode to the standby mode.

15. The single-machine control method according to claim 11, wherein the determining the output type of the single-machine according to the operation mode of the single-machine comprises:
when the operation mode is the voltage source mode, determining the output type of the single-machine is a first output type; wherein the first output type is to output a rated alternating voltage at a point of common coupling;
when the operation mode is the current source mode, determining the output type of the single-machine is a second output type; wherein the second output type is to start the grid connection operation.

16. The single-machine control method according to claim 11, wherein the when the SOC value of the single-machine is consistent with the average SOC value, switching the operation mode of the single-machine to the standby mode comprises:
when a difference between the SOC value of the single-machine and the average SOC value is within a preset range, determining that the SOC value of the single-machine is consistent with the average SOC value, and switching the operation mode of the single-machine to the standby mode.

17. The single-machine control method according to claim 11, wherein the single-machine control method further comprises:
broadcasting the operation mode of the single-machine to the parallel-machine system and receiving operation modes broadcasted by all single-machines in the parallel-machine system;
when it is determined that there exists no single-machine operating in the current source operation mode in the parallel-machine system, switching the operation mode of the single-machine to the voltage source mode.

18. A single-machine control apparatus, comprising: a first operation switching module, an output type determination module and a second operation switching module;
wherein the first operation switching module is configured to: broadcast an SOC value of a single-machine to a parallel-machine system, and when the parallel-machine system meets a condition for starting SOC balancing, switch an operation mode of the single-machine according to a numerical comparison result between the SOC value of the single-machine and an average SOC value of the parallel-machine system;
the output type determination module is configured to: determine an output type of the single-machine according to the operation mode of the single-machine, wherein when the operation mode is a voltage source mode, a rated voltage is to be output; when the operation mode is a current source mode, a grid connection operation is to be started;
the second operation switching module is configured to: update the SOC value of the single-machine every a preset duration, and compare the updated SOC value of the single-machine and the average SOC value, switch the operation mode of the single-machine based on the updated numerical comparison result, wherein when the updated SOC value of the single-machine is consistent with the average SOC value, the operation mode of the single-machine is switched to a standby mode.

19. The single-machine control apparatus according to claim 18, wherein the single-machine control apparatus further comprises a balancing condition determination module for determining whether the single-machine meets a condition for the SOC balancing, the balancing condition determination module is configured to:
acquire a maximum SOC value of single-machine and a minimum SOC value of single-machine in the parallel-machine system;
broadcast a load amount of the single-machine to the parallel-machine system and receive load amount broadcasted by all single-machines in the parallel-machine system, calculate a load amount of the parallel-machine system according to the received load amount and the load amount of the single-machine; and
when it is determined that a difference between the maximum SOC value of single-machine and the minimum SOC value of single-machine exceeds a preset threshold, that the parallel-machine system is in a preset balancing time period and that the load amount of the parallel-machine system is less than a preset load amount, determine that the parallel-machine system meets the condition for starting the SOC balancing.

20. The single-machine control apparatus according to claim 18, wherein the single-machine control apparatus further comprises a data receiving and calculating module configured to acquire the average SOC value of the parallel-machine system, specifically being that:
receiving SOC values broadcasted by all single-machines in the parallel-machine system; and
calculating the average SOC value of the parallel-machine system according to the received SOC values and the SOC value of the single-machine.

21. The single-machine control apparatus according to claim 18, wherein the switching the operation mode of the single-machine according to the numerical comparison result between the SOC value of the single-machine and the average SOC value comprises:
when the SOC value of the single-machine is greater than the average SOC value, switching the operation mode to the current source mode;
when the SOC value of the single-machine is less than the average SOC value, switching the operation mode to the voltage source mode;
when the SOC value of the single-machine is consistent with the average SOC value, switching the operation mode to the standby mode.

22. The single-machine control apparatus according to claim 18, wherein the determining the output type of the single-machine according to the operation mode of the single-machine comprises:
when the operation mode is the voltage source mode, determining the output type of the single-machine is a first output type; wherein the first output type is to output a rated alternating voltage at a point of common coupling;
when the operation mode is the current source mode, determining the output type of the single-machine is a second output type; wherein the second output type is to start the grid connection operation.

23. The single-machine control apparatus according to claim 18, wherein when the SOC value of the single-machine is consistent with the average SOC value, switching the operation mode of the single-machine to the standby mode comprises:
when a difference between the SOC value of the single-machine and the average SOC value is within a preset range, determining that the SOC value of the single-machine is consistent with the average SOC value, and switching the operation mode of the single-machine to the standby mode.

24. The single-machine control apparatus according to claim 18, wherein the single-machine control apparatus further comprises a third operation switching module, and the third operation switching module is configured to:
broadcast the operation mode of the single-machine to the parallel-machine system and receive operation modes broadcasted by all single-machines in the parallel-machine system;
when it is determined that there exists no single-machine operating in the current source operation mode in the parallel-machine system, switch the operation mode of the single-machine to the voltage source mode.
